# EUROPEAN PATENT SPECIFICATION

(11) **EP 1 412 860 B1**
(45) Date of publication and mention of the grant of the patent: **08.10.2008**
(21) Application number: 01960690.4
(22) Date of filing: 03.08.2001
(51) Int. Cl.: G06F 12/08, H04L 12/28

(54) **METHOD, SYSTEM AND TERMINAL FOR DATA NETWORKS WITH DISTRIBUTED CACHES**
VERFAHREN, SYSTEM UND ENDGERÄT FÜR DATENNETZE MIT VERTEILTEN CACHE-SPEICHERN
PROCEDE, SYSTEME ET TERMINAL POUR RESEAUX DE DONNEES AVEC CACHES REPARTIS

(43) Date of publication of application: 28.04.2004
(73) Proprietor: Nokia Corporation, 02150 Espoo (FI)
(72) Inventor: SALO, Juha, FIN-20660 Littoinen (FI); AALTONEN, Janne, FIN-20900 Turku (FI)
(74) Representative: Read, Matthew Charles
(86) International application number: PCT/EP2001/009640
(87) International publication number: WO 2003/014942

(56) References cited:
- EP-A- 0 836 145
- EP-A- 1 059 763
- WO-A-00/42519
- WO-A-99/48009
- US-A- 10 061
- US-A- 13 088
- US-A- 5 878 223

## Description

The present invention relates to improvements in network configuration and, more particularly, to improving the system performance, especially in remote network access.

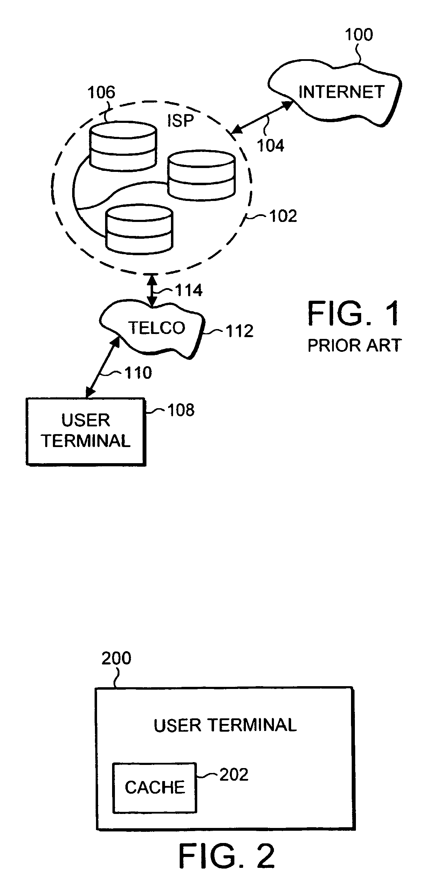

Use of the Internet is expanding rapidly, however the speed of access can still be frustratingly slow. One of the reasons for this is the way in which information is accessed from the Internet, as outlined in Figure 1. A home user with a user terminal 108 typically connects to the Internet 100 using a dial-up connection 110 to an Internet service provider (ISP) 102, via a telecommunications network 112. When the user terminal 108 requests data from the Internet 100, the ISP 102 will first try to supply that information from large caches 106 which are maintained by the ISP. The caches are huge storage devices, which can typically store many terabytes of data. If the required data is not available in the cache, the ISP requests the data from the Internet and supplies the data to the user terminal 108. The connection 104 between the ISP and the Internet is costly, and is one of the reasons why ISPs maintain such caches. The requested data may be stored in the cache so that if the same data is requested by another user at a later date, the ISP can source the data directly, without having connect to the Internet directly. One of the downsides with such a system is that all data is sourced from the ISP, and data which is not in the ISP cache must be sourced from the Internet. Consequently, retrieving data can be slow.

Currently, a number of Internet browsers, such as Microsoft Internet Explorer and Netscape Navigator, which run on user terminals, keep a local copy of data requested from the ISP. In this way, data which is requested frequently by a user should be available locally, without having to access the ISP. Whilst such a solution can increase the amount of data which is sourced locally, no improvement in performance is achieved when requesting data which has not previously been requested by a user, as such data must still be sourced from the ISP in the manner described above. Similarly, when such data as, for example, the pages of an electronic newspaper which are updated daily or hourly are requested, the local copy is likely to be out-of-date. The present solution is not satisfactory for frequently changing data, as such data must still be sourced from the ISP to ensure that it is up-to-date.

Accordingly, one aim of the present invention is to overcome the above mentioned problems.

US 5,878,223 describes a system wherein a computer operated by a network provider sends, over a communications network, one or more clients a number of likely to-be-predicted pages based on pages requested by the clients over the communications network. The likely-to-be predicted pages are selected according to probabilities stored by the network provider, and, upon receipt at a client, are stored in a local cache.

According to a first aspect of the present invention, there is provided a method of accessing data on a first network from a user terminal having a local store, wherein the first network is accessed via a service provider having a cache of data classified according to popularity available on the network, comprising: requesting data; determining whether the requested data is available from the local store and if the data is not available from the local store requesting the requested data from the service provider; receiving at the local store, via a second network, a collection of classified data from the cache of the service provider, the collection of classified data containing data based not exclusively on the data requested by the user terminal; storing at the user terminal predefined user preferences; and storing at the local store a selection of the collection of classified data received at the local store, wherein the selection is determined to match the stored predefined user preferences; and wherein the second network being a broadcast network..

According to a second aspect of the present invention, there is provided a user terminal for accessing data on a first network, the user terminal having a local store, and wherein the first network is accessed via a service, comprising: means for requesting data from the first network; a processor for determining whether the requested data is available from the local store and, if the data is not available from the local store, requesting the requested data from the service provider; a receiver for receiving, via a second network, a collection of data from the service provider, the collection of data containing data not exclusively based on the data requested by the user terminal; and means for storing predefined user preferences; and wherein the second network is a broadcast network and the processor is configured to store at the local store a selection of the collection of data, the selection being determined to match the stored predefined user preferences.

Advantageously, the present invention speeds up user access of the most frequently accessed or most popular information. By keeping a local copy at the user terminal of selected information from the ISP cache increases the probability that requested data is available locally, without having to access the ISP. Additionally, information may be accessed free of charge without having to connect to an ISP. Further benefits include reducing the demand on existing dial-up servers, since much of the requested information will be sourced locally. For the ISP, the present invention may be used as a further revenue source by charging users for receiving local cache data.

The invention will now be described, by way of example only, with reference to the accompanying diagrams, in which:
Figure 1 is a block diagram showing an overview of a system according to the prior art;
Figure 2 is a block diagram showing an embodiment of a user terminal according to the present invention;
Figure 3 is a block diagram showing an embodiment of a service provider according to the present invention;
Figure 4 is a block diagram showing an overview of a system according to an embodiment of the present invention; and
Figure 5 is a block diagram showing one embodiment of the user terminal 200 in greater detail.

Figure 1 is a block diagram showing an overview of a system according to the prior art, as described above.

Figure 2 is a block diagram showing a first embodiment of a user terminal according to the present invention. The user terminal 108 of Figure 1 is replaced by a user terminal 200 comprising a local cache 202. The local cache 202 can be any storage device with a high capacity, and preferably allows rapid access to the data stored thereon. In a preferred embodiment of the present invention the cache is a high capacity hard disk drive.

The present invention is based on the concept that a selection of the data stored on the ISP cache 106 is downloaded onto the local cache 202. When a user terminal requests data from the Internet, the local cache is checked first of all to see if the requested data is present. If it is present, the data is sourced from the local cache. If the data is not in the local cache, a connection is made with the ISP in the normal manner and the data is sourced by the ISP. By storing a selection of data locally at the user terminal speeds up access times for data which is present in the cache. Requested data which was sourced from the ISP may optionally be stored in the local cache 202.

The way in which data is selected for use in the local cache is described below.

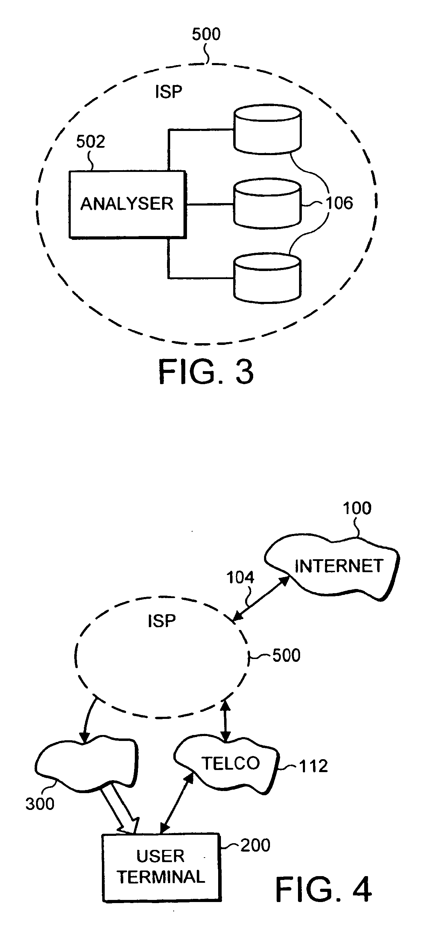

Figure 3 is a block diagram showing an embodiment of a service provider according to the present invention. The ISP 500 is similar to the ISP 102 of Figure 1 but additionally comprises an analyser module 502 for keeping and analysing statistics of the usage of the data stored in the caches 106. For example, each time data is requested, by any user, from one of the caches 106, the analyser keeps track of the number of times that data has been requested (this is commonly referred to as the number of hits).

The analyser 502 effectively classifies the cached data according to popularity, and enables all requested data to be ranked according to the number of hits. The analyser can logically reorganise the data on the caches 106 according to the rank, or alternatively may keep a separate listing of ranked data and a link to the actual location of that data on the cache.

The data stored in the ISP cache is based on the requested data from all the user terminals which connect to the ISP. In this way, given the large numbers of users who use an ISP, there is a high probability that the data requested by any individual user will be present in the ISP cache. Caches typically use a renewal algorithm to regularly remove data which has not been accessed recently, thereby ensuring that predominantly only popular information is stored in the cache.

According to one embodiment of the present invention the ISP 500 can arrange for a selection of the ISP cache to be transmitted to the local cache. The part of the ISP cache transmitted could be, for example, 10Gb of the data with the most hits. If the user terminal receiving this data has a cache smaller than the amount of data being transmitted, it is preferred that the local cache is filled with the most popular data first.

In an alternative embodiment, the ISP cache can be classified into data of different subject areas, and the data in each subject area can be further ranked according to the number of hits. In this embodiment, all of the data is transmitted to the local cache, and the processor 406 of the user terminal decides whether to accept data from each category depending on predefined user preferences. In yet a further alternative embodiment, the ISP can store user preferences for each user terminal, and download the selection of cache data only to those user terminals with matching preferences, using for example a multicast protocol.

By storing the most popular data of the ISP cache in the local cache increases the likelihood that the data required by the user will be found in the local cache.

The present invention provides a number of embodiments offering different ways in which the selected data may be downloaded from the ISP to the local cache.

In one embodiment, the selected data is downloaded over the normal dial-up connection 110. In a further, preferred, embodiment, the user terminal is adapted to receive data from a broadcast or broadband network, as exemplified in Figure 4. Any suitable point-to-point network could also be used. In this embodiment, the ISP 500 transmits the selection of data for downloading to the local cache to the network 300 from where the data is transmitted to one or more user terminals. Examples of suitable networks include digital video broadcast (DVB) and synchronous digital subscriber line (ADSL). In the case of a broadcast network, such as a DVB network, the very high bandwidths and large coverage makes this an ideal medium for transmitting the selection of data to a large number of user terminals.

The user terminal is preferably arranged to receive the selection of data based on a predetermined schedule, for example, to allow the data to be downloaded overnight or at another time when the user terminal is not is use. Obviously, the user terminal would have to be powered-up in order to receive such a transmission.

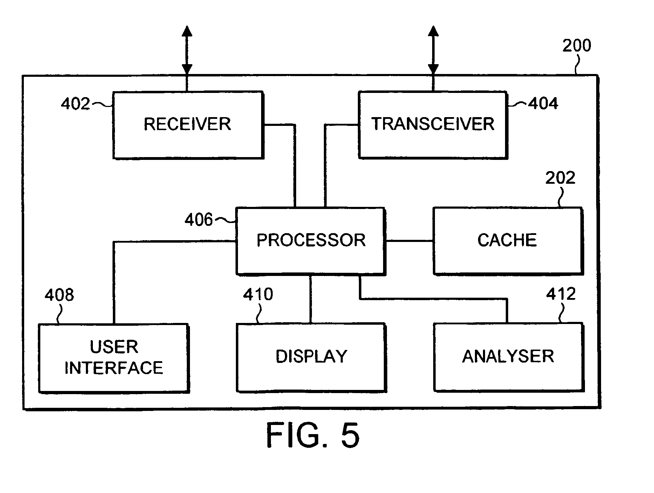

Figure 5 is a block diagram showing one embodiment of the user terminal 200 in greater detail. The user terminal 200 comprises a transceiver 404 for connecting with an ISP via a telecommunications network, as shown in Figure 3. A receiver 402 is also provided for receiving data from a second network, such as a broadband or broadcast network, as described above. A processor 406 controls the receiver 402, the transceiver 404, a user interface 408, a display 410 and a local cache 202. The user interface 408 and the display 410 enable the user to operate the user terminal as will be appreciated by those skilled in the art. The receiver 402 can be any suitable receiver for receiving data from the network 300. For example, if the network 300 is a DVB network, the receiver 402 is a DVB receiver. The receiver 402 receives a selection of data from the ISP cache and stores the received data, or part of the received data, in the cache 202. Subsequently, when a user requests data from the Internet, the processor first of all checks to see whether the data is available in the cache 202. If the data is available, it is sourced from the cache, otherwise a connection with the ISP is made via the transceiver 404 and the data is sourced from the ISP. The processor 406 also includes a scheduler to enable the selection of data to be received by the receiver 402 and stored in the cache 202 as appropriate. The scheduler may also include timers which can be arranged to power-on the user terminal at a predetermined time in order to receive a scheduled transmission of data. The user terminal 400 also includes an analyser 412, the function of which is described below.

The selection of data from the ISP cache to be downloaded to the local user terminal cache is of prime importance. If the data on the local cache is not representative of the type of the data the user is likely to try and access, then browsing times may well be reduced, due to the additional step of determining whether requested data is present on the local cache, prior to connection to the ISP.

As previously mentioned, the cache of an ISP may typically have a capacity of many terabytes, whereas the local cache is likely to be in the order of tens of gigabytes. Additionally, different user terminals are likely to have caches of differing sizes.

As a result of present invention, much of the data requested by the user will be sourced from the local cache, not from the ISP, eliminating the need to connect to the ISP and greatly increasing performance. In order to maintain accurate usage statistics on the ISP cache, for example for classifying the data according to the number of hits, the user terminal preferably needs to collect the usage data and to provide the ISP with the statistics. Additionally, many Internet pages contain adverts, hits counters and the like, for which the usage statistics also need to be accurately reported back to the advertisers. The analyser 412 shown in Figure 5 performs just such tasks. The statistical information from the analyser 412 can be fed back to the ISP via the transceiver 404, either on an ad-hoc basis whilst connected to the ISP or, alternatively, this task could be scheduled to take place overnight or when the user terminal is not in use.

The user terminal 200 of Figure 5 may additionally comprise a security module (not shown) under control the processor 406 which is used to scramble the contents of the local cache. Since the local cache represents the most frequently requested data from a number of different users, it could be possible to analyse the cache data to discover the kind of data other users are requesting. If the majority of users of an ISP work, for example, for one company, other users of the ISP could possibly determine, from the local cache, information which could be prejudicial to that company. Scrambling of the local cache would prevent such analysis, and would help protect the privacy of users. Those skilled in the art will appreciate that there are numerous ways in which such scrambling could be performed, and such techniques will not be discussed herein.
In yet a further embodiment of the present invention, the selection of data transmitted by the service provider could alternatively be determined by the service provider according to parameters other than based on the usage statistics of data in the ISP cache. For example, the service provider may provide its own data to user terminals, for example, data which is supplied from a private network. In a further example, the ISP could search the Internet for information about specific topics, and transmit this information to specific users of groups of users. For example, a chemical research centre may wish to receive only information about chemical research, and would not be interested in receiving information regarding other topics.

The frequency at which the local cache is updated may be changed depending on, for example, different subscription levels paid by a user. On a basic subscription level, the local cache may only be updated nightly, whereas for a premium user the cache may be updated several times a time. Additionally, it may be possible for a user to request a download of cache data at an alternative time.

The present invention can be applied to both home user terminals, using for example a telephone dial-up connection, and to mobile user terminals. Mobile user terminals could use, for example, the wireless application protocol (WAP), and could connect to an ISP via any kind of typical mobile communication protocol, including GSM, GPRS, WCDMA, etc.

## Claims

1. A method of accessing data on a first network (100) from a user terminal (200) having a local store (202) and wherein the first network (100) is accessed via a service provider (500) having a cache (106) containing data classified according to popularity available on the network (100), comprising:
requesting data;
determining whether the requested data is available from the local store (202) and if the data is not available from the local store (202) requesting the requested data from the service provider (500);
receiving at the local store (202), via a second network (300), a collection of classified data from the cache (106) of the service provider (500), the collection of classified data containing data based not exclusively on the data requested by the user terminal (200); and **characterised by**
storing at the user terminal (200) predefined user preferences; and
storing at the local store a selection of the collection of classified data received at the local store, wherein the selection is determined to match the stored predefined user preferences; and by
the second network (300) being a broadcast network.

2. The method of claim 1, wherein the data in the cache of the service provider is further classified according to subject area.

3. The method of any preceding claim, wherein the collection of classified data comprises a selected portion of the classified data from the cache.

4. The method of any preceding claim, wherein the step of receiving the collection of classified data is adapted to receive the collection of classified data according to a predetermined schedule.

5. The method of claim 4 including receiving the collection of classified data according to one of a plurality of user selectable subscription preferences.

6. The method of any preceding claim, further comprising encrypting the contents of the local store (202).

7. The method of any preceding claim, wherein, if the data is not available from the local store (202), the step of requesting the requested data from the service provider (500) is adapted for requesting the requested data from the service provider (500) via a third, telecommunications network (112).

8. The method of claim 7, wherein the third network (112) is a point-to-point network.

9. The method of any preceding claim, wherein the broadcast network (300) is a DVB network.

10. The method of any preceding claim including statistically analysing the usage of data from the local store (202) to produce statistical usage data and reporting the statistical usage data to the service provider (500).

11. The method of claim 10 including carrying out the reporting of the statistical usage data when the user terminal (200) is otherwise inoperative.

12. A user terminal (200), having a local store (202), for accessing data on a first network (100), wherein the first network (100) is accessed via a service provider (500), comprising:
means for requesting data from the first network (100);
a processor (406) for determining whether the requested data is available from the local store (202) and, if the data is not available from the local store (202), requesting the requested data from the service provider (500);
a receiver (402) for receiving via a second network (300), a collection of data from the service provider (500), the collection of data containing data not exclusively based on the data requested by the user terminal; and **characterised in that**
the user terminal (200) further comprises means for storing predefined user preferences;
the second network (300) is a broadcast network; and
the processor (406) is configured to store at the local store a selection of the collection of data, wherein the selection is determined to match the stored predefined user preferences.

13. The user terminal (200) of claim 12, further comprising a scheduler to control the receiver (402) to receive the collection of data according to a predetermined schedule.

14. The user terminal (200) of either of claims 12 or 13, further comprising encryption means for encrypting and decrypting the contents of the local store (202).

15. The user terminal (200) of any of claims 12 to 14, including a transceiver (404) adapted for use with a third, telecommunications network (112) and to receive the requested data from the service provider (500), if the requested data is not available from the local store (202).

16. The user terminal (200) of claim 15, wherein the third telecommunications network (112) is a point-to-point network.

17. The user terminal (200) of any of claims 12 to 16 wherein the broadcast network (300) is a DVB network.

18. The user terminal (200) of any of claims 12 to 17 including an analyser (412) operable to analyse statistically the usage of data from the local store (202) to produce statistical usage data to be reported to the service provider (500).

19. The user terminal (200) of claim 18 operable to report the statistical usage data to the service provider (500) when otherwise inoperative.

20. A network including a service provider (500) coupled to a user terminal (200) as claimed in any one of claims 12 to 19.

## Patentansprüche

1. Zugriffsverfahren für Daten auf einem ersten Netzwerk (100) von einem Anwenderendgerät (200), das einem lokalen Speicher (202) besitzt, und wobei auf das erste Netzwerk (100) über einen Dienstanbieter (500) zugegriffen wird, der einen Zwischenspeicher (106) besitzt, der auf dem Netzwerk (100) verfügbare Daten, die nach Popularität klassifiziert sind, enthält, aufweisend:
Anfordern von Daten;
Bestimmen, ob die angeforderten Daten aus dem lokalen Speicher (202) verfügbar sind, und, wenn die Daten nicht aus dem lokalen Speicher (202) verfügbar sind, Anfordern der angeforderten Daten vom Dienstanbieter (500);
Empfangen am lokalen Speicher (202), über ein zweites Netzwerk (300), eine Sammlung klassifizierter Daten aus dem Zwischenspeicher (106) des Dienstanbieters (500), wobei die Sammlung klassifizierter Daten Daten basierend nicht ausschließlich auf den Daten, die durch das Anwenderendgerät (200) angefordert wurden, enthält;
und **gekennzeichnet durch**
Speichern am Anwenderendgerät (200) vordefinierter Anwenderpräferenzen;
Speichern am lokalen Zwischenspeicher einer Auswahl der am lokalen Zwischenspeicher empfangenen Sammlung klassifizierter Daten, wobei die Sammlung passend zu den gespeicherten vorbestimmten Anwenderpräferenzen bestimmt wird; und **durch**, dass das zweite Netzwerk (300) ein Rundfunknetzwerk ist.

2. Verfahren gemäß Anspruch 1, wobei die Daten im Zwischenspeicher des Dienstanbieters weiter nach Fachgebiet klassifiziert sind.

3. Verfahren gemäß einem der vorhergehenden Anspruch, wobei die Sammlung der klassifizierten Daten einen ausgewählten Teil der klassifizierten Daten aus dem Zwischenspeicher aufweisen.

4. Verfahren gemäß einem der vorhergehenden Ansprüche, wobei der Schritt des Empfangens der Sammlung klassifizierter Daten angepasst ist, die Sammlung klassifizierter Daten nach einem vorbestimmten Zeitplan zu empfangen.

5. Verfahren gemäß Anspruch 4, enthaltend Empfangen der Sammlung klassifizierter Daten nach einer von einer Vielzahl durch einen Anwender auswählbarer Subskriptionspräferenzen.

6. Verfahren gemäß einem der vorhergehenden Ansprüche, weiter aufweisend Verschlüsseln der Inhalte des lokalen Speichers (202).

7. Verfahren gemäß einem der vorhergehenden Ansprüche, wobei, wenn die Daten aus dem lokalen Speicher (202) nicht verfügbar sind, der Schritt des Anforderns der angeforderten Daten vom Dienstanbieter (500) zum Anfordern der angeforderten Daten vom Dienstanbieter (500) über ein drittes Telekommunikationsnetzwerk (112) angepasst ist.

8. Verfahren gemäß Anspruch 7, wobei das dritte Netzwerk (112) ein Punkt-zu-Punkt-Netzwerk ist.

9. Verfahren gemäß einem der vorhergehenden Ansprüche, wobei das Rundfunknetzwerk (300) ein DVB-Netzwerk ist.

10. Verfahren gemäß einem der vorhergehenden Ansprüche, enthaltend statistisches Analysieren der Nutzung der Daten aus dem lokalen Speicher (202), um statistische Nutzungsdaten zu erzeugen, und Berichten der statistischen Nutzungsdaten an den Dienstanbieter (500).

11. Verfahren gemäß Anspruch 10, enthaltend Ausführen des Berichtens der statistischen Nutzungsdaten, wenn das Anwenderendgerät (200) ansonsten nicht im Betrieb wäre.

12. Anwenderendgerät (200), das einen lokalen Speicher (202) besitzt, zum Zugreifen auf Daten auf einem ersten Netzwerk (100), wobei auf das erste Netzwerk (100) über einen Dienstanbieter (500) zugegriffen wird, aufweisend:
Mittel zum Anfordern von Daten vom ersten Netzwerk (100);
einen Prozessor (406) zum Bestimmen, ob die angeforderten Daten aus dem lokalen Speicher (202) verfügbar sind, und, wenn die Daten nicht aus dem lokalen Speicher (202) verfügbar sind, Anfordern der angeforderten Daten vom Dienstanbieter (500);
eine Empfangseinrichtung (402) zum Empfangen über ein zweites Netzwerk (300) einer Datensammlung vom Dienstanbieter (500), wobei die Datensammlung Daten nicht ausschließlich basierend auf den Daten, die durch das Anwenderendgerät angefordert wurden, enthält; und **dadurch gekennzeichnet,**
**dass** das Anwenderendgerät (200) weiter Mittel zum Speichern vordefinierter Anwenderpräferenzen aufweist;
**dass** das zweite Netzwerk (300) ein Rundfunknetzwerk ist; und
**dass** der Prozessor (406) konfiguriert ist, im lokalen Speicher eine Auswahl von der Datensammlung zu speichern, wobei die Auswahl passend zu den gespeicherten vordefinierten Anwenderpräferenzen bestimmt wird.

13. Anwenderendgerät (200) gemäß Anspruch 12, weiter aufweisend einen Zeitplan zur Steuerung der Empfangseinrichtung (402), die Datensammlung nach einem vorbestimmten Zeitplan zu empfangen.

14. Anwenderendgerät (200) gemäß Anspruch 12 oder 13, weiter aufweisend Verschlüsselungsmittel zum Verschlüsseln und Entschlüsseln der Inhalte des lokalen Speichers (202).

15. Anwenderendgerät (200) gemäß einem der Ansprüche 12 bis 14, enthaltend eine Transceivereinrichtung (404), die angepasst ist zur Verwendung mit einem dritten Telekommunikationsnetzwerk (112) und zum Empfangen der angeforderten Daten vom Dienstanbieter (500), wenn die angeforderten Daten nicht aus dem lokalen Speicher (202) verfügbar sind.

16. Anwenderendgerät (200) gemäß Anspruch 15, wobei das dritte Telekommunikationsnetzwerk (112) ein Punkt-zu-Punkt-Netzwerk ist.

17. Anwenderendgerät (200) gemäß einem der Ansprüche 12 bis 16, wobei das Rundfunknetzwerk (300) ein DVB-Netzwerk ist.

18. Anwenderendgerät (200) gemäß einem der Ansprüche 12 bis 17, enthaltend eine Analyseeinrichtung (412), die betreibbar ist, um statistisch die Nutzung der Daten aus dem lokalen Speicher (202) zu analysieren, um statistische Nutzungsdaten, die an den Dienstanbieter (500) zu berichten sind, zu erzeugen.

19. Anwenderendgerät (200) gemäß Anspruch 18, das betreibbar ist, die statistischen Nutzungsdaten an den Dienstanbieter (500) zu berichten, wenn es ansonsten nicht in Betrieb wäre.

20. Netzwerk enthaltend einen Dienstanbieter (500), der mit einem Anwenderendgerät (200) gekoppelt ist, wie in einem der Ansprüche 12 bis 19 beansprucht.

## Revendications

1. Procédé pour accéder à des données sur un premier réseau (100) à partir d'un terminal utilisateur (200) comportant un magasin de données local (202) et dans lequel le premier réseau (100) est accédé via un fournisseur de services (500) présentant une mémoire cache (106) comportant des données classées par popularité disponibles sur le réseau (100), comportant les étapes consistant à :
demander des données ;
déterminer si les données requises sont disponibles à partir du magasin de données local (202) et si les données ne sont pas disponibles à partir du magasin de données local (202), demander les données requises au fournisseur de services (500) ;
recevoir, au niveau du magasin de données local (202), via un second réseau (300), une collection de données classifiées de la mémoire cache (106) du fournisseur de services (500), la collection de données classifiées comportant des données basées non exclusivement sur les données requises par le terminal utilisateur (200) ; et **caractérisé par** les étapes consistant à
stocker, au niveau du terminal utilisateur (200), des préférences d'utilisateur prédéfinies ; et
stocker, au niveau du magasin de données local, une sélection de la collection de données classées reçue au niveau du magasin de données local, dans lequel la sélection est déterminée pour correspondre aux préférences d'utilisateur prédéfinies stockées ; et **caractérisé en ce que**
le second réseau (300) est un réseau de diffusion.

2. Procédé selon la revendication 1, dans lequel les données dans la mémoire cache du fournisseur de services sont en outre classées selon le domaine en objet.

3. Procédé selon l'une quelconque des revendications précédentes, dans lequel la collection de données classées comporte une partie sélectionnée des données classées de la mémoire cache.

4. Procédé selon l'une quelconque des revendications précédentes, dans lequel l'étape consistant à recevoir la collection de données classées est adaptée pour recevoir la collection de données classées selon une planification prédéterminée.

5. Procédé selon la revendication 4, comportant l'étape consistant à recevoir la collection de données classées selon une d'une pluralité de préférences d'abonnements sélectionnables par l'utilisateur.

6. Procédé selon l'une quelconque des revendications précédentes, comportant en outre l'étape consistant à chiffrer les contenus du magasin de données local (202).

7. Procédé selon l'une quelconque des revendications précédentes, dans lequel, lorsque les données ne sont pas disponibles à partir du magasin de données local (202), l'étape consistant à demander les données requises à partir du fournisseur de services (500) est adaptée pour demander les données requises au fournisseur de services (500) via un troisième réseau de télécommunication (112).

8. Procédé selon la revendication 7, dans lequel le troisième réseau (112) est un réseau point à point.

9. Procédé selon l'une quelconque des revendications précédentes, dans lequel le réseau de diffusion (300) est un réseau de radiodiffusion vidéo numérique (DVB).

10. Procédé selon l'une quelconque des revendications précédentes, comportant l'étape consistant à analyser statistiquement l'utilisation de données du magasin de données local (202) pour générer des données d'utilisation statistique et transmettre un rapport sur les données d'utilisation statistique au fournisseur de services (500).

11. Procédé selon la revendication 10 comportant l'étape consistant à mettre en oeuvre le rapport des données d'utilisation statistique lorsque le terminal utilisateur (200) est sinon inopérant.

12. Terminal utilisateur (200) comportant un magasin de données local (202) pour accéder à des données sur un premier réseau (100), dans lequel le premier réseau (100) est accédé via un fournisseur de services (500), comportant :
un moyen pour demander des données à partir du premier réseau (100) ;
un processeur (406) pour déterminer si les données requises sont disponibles à partir du magasin de données local (202) et, si les données ne sont pas disponibles à partir du magasin de données local (202), pour demander les données requises au fournisseur de services (500) ;
un récepteur (402) pour recevoir, via un second réseau (300), une collection de données du fournisseur de services (500), la collection de données comportant des données basées non exclusivement sur les données requises par le terminal utilisateur (200) ; et **caractérisé en ce que**
le terminal utilisateur (200) comporte en outre un moyen pour stocker des préférences d'utilisateur prédéfinies ;
le second réseau (300) est un réseau de diffusion ; et
le processeur (406) est configuré pour stocker, au niveau du magasin de données local, une sélection de la collection de données, dans lequel la sélection est déterminée pour correspondre aux préférences d'utilisateur prédéfinies stockées.

13. Terminal utilisateur (200) selon la revendication 12, comportant en outre un planificateur pour commander le récepteur (402) afin de recevoir une collection de données selon une planification prédéterminée.

14. Terminal utilisateur (200) selon l'une quelconque des revendications 12 ou 13, comportant en outre un moyen de chiffrement pour chiffrer et déchiffrer les contenus du magasin de données local (202).

15. Terminal utilisateur (200) selon l'une quelconque des revendications 12 à 14, comportant un émetteur - récepteur (404) adapté à une utilisation avec un troisième réseau de télécommunication (112) et pour recevoir les données requises du fournisseur de service (500), lorsque les données requises ne sont pas disponibles à partir du magasin de données local (202).

16. Terminal utilisateur (200) selon la revendication 15, dans lequel le troisième réseau de télécommunication (112) est un réseau point à point.

17. Terminal utilisateur (200) selon l'une quelconque des revendications 12 à 16, dans lequel le réseau de diffusion (300) est un réseau de radiodiffusion vidéo numérique (DVB).

18. Terminal utilisateur (200) selon l'une quelconque des revendications 12 à 17, comportant un analyseur (412) exploitable pour analyser statistiquement l'utilisation de données à partir du magasin de données local (202) pour produire des données d'utilisation statistique à transmettre au fournisseur de services (500).

19. Terminal utilisateur (200) selon la revendication 18 exploitable pour un établir un rapport des données d'utilisation statistique au fournisseur de service (500) lorsque le terminal utilisateur est sinon inopérant.

20. Réseau comportant un fournisseur de service (500) couplé à un terminal utilisateur (200) selon l'une quelconque des revendications 12 à 19.
